# EUROPEAN PATENT APPLICATION

(11) **EP 4 723 013 A1**
(43) Date of publication of application: **08.04.2026**
(21) Application number: 24306632.1
(22) Date of filing: 04.10.2024
(51) Int. Cl.: G06Q 20/32, G06Q 20/38

(54) **METHOD FOR MANAGING A PAYMENT TRANSACTION**

(71) Applicant: THALES DIS FRANCE SAS, 92190 Meudon (FR)
(72) Inventor: GASTON GUIRAO, Lorenzo, 78180 MONTIGNY-LE-BRETONNEUX (FR)
(74) Representative: Grevin, Emmanuel

(57) **Abstract**

The invention is a method for managing a payment transaction started as an EMVCo^{®} transaction with a payment application (12) installed in a payment instrument (10) comprising a digital identity wallet (16) hosting an instant application (14). After transaction refusal, the issuer bank (30) sends to the terminal a configuration data requesting continuation by the instant application. The terminal sends to the issuer bank a terminal request (85) comprising a transaction identifier and a reference of a merchant account, and provides the payment instrument with the transaction identifier and the amount. The instant application sends to issuer bank an instant payment request (87) comprising a dynamic linking authenticator generated by the digital identity wallet. After both successfully verifying that the dynamic linking authenticator is valid and ensuring that the terminal request and the instant payment request are consistent, the issuer bank sends an instant payment order to the merchant bank.

## Description

### (Field of the invention)

The present invention relates to methods for managing a payment transaction. It relates particularly to methods of managing a payment transaction in which a person carries a payment instrument that is involved with a payment terminal in the payment transaction.

### (Background of the invention)

A card payment application has inherent maximum amount limitations to pay which are contractually agreed between the cardholder (i.e. the user of the payment instrument) and the financial institution (also called issuer bank) which issued the payment application installed in the payment instrument regardless the specific form factor used (i.e. physical card, wearable, secure element in a mobile device).

For a given card payment application, the maximum limit authorized for an individual payment transaction can be a pre-established maximum authorized amount for a single transaction, the last n transactions or all transactions carried out during a predefined period.

Due to the maximum amount limitation for a card payment transaction, a card payment transaction may be rejected even if the user's bank account is provisioned with sufficient funds for the purchase.

### (Summary of the Invention)

There is a need to allow consumers to perform payments when their bank account has sufficient funds, even in case of exceeding the authorized amount for a card payment application.

The invention aims at solving the above-mentioned technical problem.

An object of the present invention is a computer-implemented method for managing a payment transaction for a transaction amount involving a payment terminal and a payment instrument. The payment transaction is started with a first payment application installed in the payment instrument as a transaction compatible with EMVCo^{®} specifications. The payment transaction is refused by an issuer bank server. The payment instrument comprises a digital identity wallet hosting an instant payment application different from the first payment application. Consequently of the refusal of the payment transaction, the issuer bank server generates and sends to the payment terminal a configuration data requesting that the payment transaction be continued by the instant payment application. Upon receipt of the configuration data, the payment terminal:
generates and sends to the issuer bank server a terminal request comprising a transaction identifier and a reference (e.g. IBAN) of a merchant bank account associated with the payment terminal,
generates and provides to the payment instrument a continuation data comprising the transaction identifier and the transaction amount; upon receipt of the continuation data, the instant payment application builds and sends to issuer bank server an instant payment request comprising the transaction identifier, the amount and a dynamic linking authenticator generated by the digital identity wallet; and
after both successfully verifying that the dynamic linking authenticator is valid and ensuring that the terminal request and the instant payment request are consistent, the issuer bank server sends an instant payment order to a merchant bank server for transferring the transaction amount to the merchant bank account.

Advantageously, the dynamic linking authenticator may be a signature generated by the digital identity wallet.

Advantageously, the configuration data and the continuation data may comprise a level of risk attached to the payment transaction and depending on the level of risk, the digital identity wallet may request a user of the payment instrument to present appropriate credentials before generating the dynamic linking authenticator.

Advantageously, the continuation data may comprise a token generated from the reference of the merchant bank account, the instant payment request may comprise said token and the issuer bank server may access a token service provider to check consistency between the token and the reference of the merchant bank account received through the terminal request.

Advantageously, the payment terminal may provide the continuation data to the payment instrument through a two-dimensional barcode or a contactless communication protocol.

Advantageously, the merchant bank server may send to the payment terminal a confirmation message notifying the payment terminal of the successful execution of the payment transaction involving the instant payment application.

Advantageously, the digital identity wallet may be compliant with the electronic IDentification, Authentication and trust Services, eIDAS, regulation.

Another object of the present invention is a payment system comprising a payment instrument, a payment terminal, and an issuer bank server. The payment instrument comprises a first payment application able to start a payment transaction compatible with EMVCo^{®} specifications. The issuer bank server is able to accept or refuse the payment transaction. The payment instrument comprises a digital identity wallet that hosts an instant payment application different from the first payment application. As a consequence of the refusal of the payment transaction, the issuer bank server is configured to generate and send to the payment terminal a configuration data requesting that the payment transaction be continued by the instant payment application. Upon receipt of the configuration data, the payment terminal is configured to:
generate and send to the issuer bank server a terminal request comprising a transaction identifier and a reference of a merchant bank account associated with the payment terminal, and
generate and provide to the payment instrument a continuation data comprising the transaction identifier and the amount.

Upon receipt of the continuation data, the instant payment application is configured to build and send to the issuer bank server an instant payment request comprising the transaction identifier, the amount and a dynamic linking authenticator generated by the digital identity wallet.

After both successfully verifying that the dynamic linking authenticator is valid and ensuring that the terminal request and the instant payment request are consistent, the issuer bank server is configured to send an instant payment order to a merchant bank server for transferring the amount to the merchant bank account.

Advantageously, said configuration data and the continuation data may comprise a level of risk attached to the payment transaction and, depending on the level of risk, the digital identity wallet may be configured to request a user of the payment instrument to present appropriate credentials before generating the dynamic linking authenticator.

Advantageously, the continuation data may comprise a token generated from the reference of the merchant bank account, the instant payment request may comprise said token and the issuer bank server may be configured to access a token service provider to check consistency between the token and the reference of the merchant bank account received through the terminal request.

Advantageously, the payment terminal may be configured to provide the continuation data to the payment instrument through a two-dimensional barcode or a contactless communication protocol.

Advantageously, the merchant bank server may be configured to send to the payment terminal a confirmation message notifying the payment terminal of the successful execution of the payment transaction involving the instant payment application.

Advantageously, the digital identity wallet may be compatible with the electronic IDentification, Authentication and trust Services, eIDAS, regulation.

Advantageously, the payment instrument may be a smartphone, a physical smart card, a payment ring, a payment bracelet or a payment watch.

### (Brief description of the drawings)

Other characteristics and advantages of the present invention will emerge more clearly from reading the following description of a number of preferred embodiments of the invention with reference to the corresponding accompanying drawings in which:
- Fig. 1 shows an exemplary flow diagram for managing a payment transaction involving a payment instrument according to an example of the invention; and
- Fig. 2 shows a diagram of architecture of a payment system for managing a payment transaction according to an example of the invention.

### (Detailed description of the preferred embodiments)

Some embodiments of the present invention relate to a new method for managing a payment transaction using both a card and an instant payment application activated in sequence by the payer if certain conditions are met. The invention is compatible with existing EMVCo protocol to pay in the Point of Interaction (Payment in a Physical Terminal in a shop). Notice that the invention could be extended to other payment instruments than the EMV card payment application. For instance, if the consumer wants to pay using units of central bank digital currencies (e.g. in digital euros) and the account (local in the Wallet or remote in the Bank) in digital euros is insufficiently provisioned, then switching to an Instant payment would enable the consumer to pay.

The invention may apply to a card payment application installed in any type of physical payment instrument usually associated to a user (i.e. cardholder). The payment instrument may be a physical smart card, a portable apparatus (like a mobile phone) hosting a digital payment card, a wearable device like a payment ring, a payment watch, or a payment bracelet for instance.

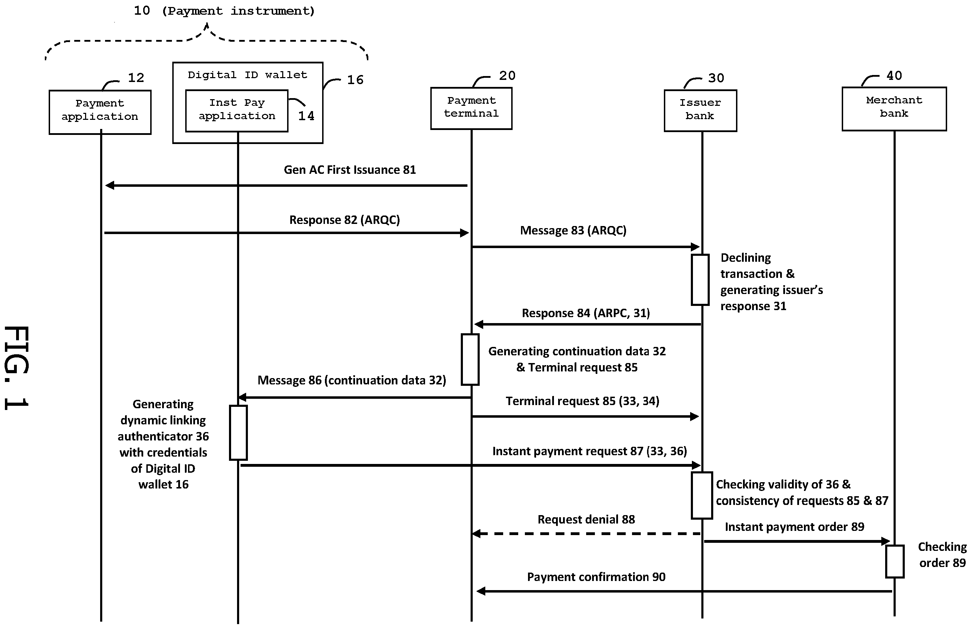

Figure 1 depicts an exemplary flow diagram for managing a payment transaction involving a payment instrument according to an example of the invention.

In this example, the payment instrument 10 is a mobile phone hosting a first payment application 12 which is designed to carry out payment transactions according to a conventional card transaction flow like a transaction flow defined by EMVCo^{®} specifications.

The payment instrument comprises a digital identity wallet 16 that hosts an instant payment application 14 which is different from the first payment application 12.

In some embodiments, the first payment application 12 can be hosted in another digital wallet (like a payment wallet) stored into the memory of the payment instrument.

In some embodiments, the first payment application 12 can be hosted in the digital identity wallet 16. In such a case, the two payment applications might be handled via a "superarching payment domain application" (e.g., a SAM) directly offered by the e-IDAS v2.0 Wallet Issuer (like a government). This "superarching payment domain application" can provide access to the Issuer Payment Application to resources offered by the e-IDAS Wallet like biometric authentication using for instance (1) a biometric reference enrolled by the Government and (2) the generation of a strong digital signature. Together they generate strong not-repudiable evidence of the willingness of the consumer to pay a given amount to a specific merchant in a physical location at a certain time.

The first payment application 12 and the instant payment application 14 are issued by the same bank.

A digital identity wallet is a software application that allows a user to securely store, manage and share with a third party the user's personal identity using credentials that enable this third party to verify the user's claimed identity.

The digital identity wallet 16 can be a digital identity wallet designed according to the electronic IDentification, Authentication and trust Services" (eIDAS V2.0) European regulation.

The instant payment application 14 is designed to participate to immediate money transfers (also called instant transfers) between two bank accounts.

The payment instrument comprises a contactless interface allowing to communicate with a payment terminal. Preferably, the contactless interface could be a Near Field Communication (NFC) interface.

Let's assume that the user of the payment instrument 10 wants to perform a face-to-face card payment transaction with a payment terminal 20 for a money amount. In other words, the payment instrument and the payment terminal are placed close to each other. The user may tap the payment instrument with the payment terminal to allow the payment instrument to contribute to the payment transaction.

The payment application 12 is configured to participate to the payment transaction by using a conventional flow as defined by EMVCo^{®} specifications.

According to the conventional flow, the payment terminal 20 can send to the payment instrument a Generate Application Cryptogram First Issuance (also referred to as Generate AC First Issuance or Gen AC First Issuance) command 81 as defined by EMVCo^{®} specifications.

Upon receipt of the Gen AC First Issuance command 81, the payment application 12 can generate and send to the payment terminal a conventional response 82 to the command 81. For instance, the response 82 can contain an Authorization ReQuest Cryptogram (ARQC) as defined by EMVCo^{®} specifications. Preferably, the ARQC prompts an issuer authorization online with the server of the issuer bank.

In turn, the payment terminal 20 can send a message 83 comprising the transaction amount and the ARQC to a server 30 of the bank that issued the payment application 12. The message 83 aims at getting the authorization to complete the payment transaction.

Upon receipt of the message 83, the issuer bank server 30 may decline the payment transaction due to a negative control of the transaction amount compared to a preset threshold. Following the refusal of the payment transaction, the issuer bank server 30 can generate a configuration data 31 requesting that the payment transaction be continued by the instant payment application 14. Then the issuer bank server 30 can send to the payment terminal 20 a response message 84 containing the configuration data 31 and an Authorization Response Cryptogram (ARPC) as defined by EMVCo^{®} specifications. The ARPC reflects the refusal of the issuer bank server 30 to perform the payment transaction using the conventional EMV^{®} flow.

The configuration data 31 can contain an additional item explicitly requesting the payment terminal to continue the pending payment transaction through an Instant payment mechanism.

The configuration data 31 can include the transaction amount.

Upon receipt of the configuration data 31 (conveyed through the response message 84), the payment terminal can generate a terminal request 85 that includes a transaction identifier 33 and a reference 34 of a merchant bank account associated with the payment terminal. Then the payment terminal can send the terminal request 85 to the issuer bank server 30. The reference 34 can be an international bank account number (IBAN) of the merchant to which the payment terminal is assigned.

Upon receipt of the configuration data 31 (Just before, just after, or during terminal request 85 processing), the payment terminal can generate a continuation data 32 that comprises the transaction identifier 33 and the transaction amount. Then, the payment terminal can send a message 86 including the continuation data 32 to the payment instrument 10.

The sending of the message 86 is performed through a contactless protocol like NFC for example. The user needs to do a second tap for triggering the receipt of the message 86. That proves the acceptance by the payer (i.e. user) to switch from the first payment application to the instant payment application as suggested by the issuer bank.

Then, the payment instrument 10 can deliver the received continuation data 32 to the instant payment application 14.

Upon receipt of the continuation data 32, the instant payment application 14 can build an instant payment request 87 comprising the transaction identifier 33 found in the continuation data 32, the transaction amount and a dynamic linking authenticator 36 generated by the digital identity wallet 16.

It can be noted that the instant payment application 14 (which is hosted by the digital identity wallet 16) can interact with the digital identity wallet 16 to request and retrieve the dynamic linking authenticator 36 generated by the digital identity wallet 16.

The instant payment request 87 can comprise a token previously generated from the reference 34 of a merchant bank account.

The digital identity wallet 16 uses its own secret data (like a secret key, a private key or a certificate) to generate the dynamic linking authenticator 36.

In some embodiments the dynamic linking authenticator 36 is a signature or a hash generated by the digital identity wallet 16.

Then, the instant payment application 14 can send the instant payment request 87 to issuer bank server 30.

The payment instrument 10 can send the instant payment request 87 to the issuer bank server 30 through the payment terminal 20 or using an out of band communication channel like channel based on a combination of a telecom channel and conventional networks like the Internet.

Upon receipt of the instant payment request 87, the issuer bank server 30 can verify that the dynamic linking authenticator 36 is valid and verify that the content of the terminal request 85 and the content of the instant payment request 87 are consistent. The issuer bank server 30 use a public key assigned to the digital identity wallet 16 to check the validity of the dynamic linking authenticator 36.

The issuer bank server 30 can check the consistency by verifying that the terminal request 85 and the instant payment request 87 comprise the same transaction identifier 33. Instead, or in addition, the issuer bank server 30 can check the consistency by verifying that the terminal request 85 and the instant payment request 87 comprise the same transaction amount.

In some embodiments, the issuer bank server 30 may have stored a track of the denial of the payment transaction (initiated with a conventional EMVCo^{®} flow) and check the consistency by verifying that transaction data (like user's identifier and/or transaction amount) of the initial transaction are the same as the transaction parameters included in the instant payment request 87.

If the dynamic linking authenticator 36 is valid and the content of the terminal request 85 and the content of the instant payment request 87 are consistent, the issuer bank server 30 can generate and send an instant payment order 89 to a merchant bank server 40 for transferring the transaction amount from the user's bank account to the merchant's bank account.

If the dynamic linking authenticator 36 is invalid or the content of the terminal request 85 and the content of the instant payment request 87 are not consistent, the issuer bank server 30 can generate and send a request denial message 88 to the payment terminal to inform the payment terminal that the payment transaction definitely failed.

Upon receipt of instant payment order 89, the merchant bank server 40 can send to the payment terminal a confirmation message 90 notifying the payment terminal 20 of the successful execution of the payment transaction involving the instant payment application 14.

I can be noted that the first payment application 12 can be fully compliant with EMVCo^{®} specifications as it is unaware that the payment transaction can take place using an Instant Payment transfer secure by the digital identity wallet 16 and initiated by the issuer bank server 30.

In some embodiments, upon denial of the payment transaction under its initial form (i.e. conventional transaction flow), the issuer bank server 30 can assess a level 35 of risk of the payment transaction to be continued under an instant transfer form. Such level 35 of risk can be computed from the transaction amount, the history of the user's bank account, or any appropriate parameters. Then, the issuer bank server 30 can include the level 35 of risk in the configuration data 31 which is sent to the payment terminal 20 through the response 84. The payment terminal 20 can include the level 35 of risk in the continuation data 32.

The instant payment application 14 can provide the level 35 of risk to the digital identity wallet 16.

Then depending on the level 35 of risk, the digital identity wallet 16 can decide to request the user 50 of the payment instrument to present appropriate credentials before generating (or not) the dynamic linking authenticator 36. Thus, by checking a level of risk attached to the payment transaction, the digital identity wallet 16 can adapt the security rule applied before generating the dynamic linking authenticator 36 that allows to pursue the payment transaction processing.

For instance, the digital identity wallet 16 can request the user 50 to present a PIN code, a password or a biometric data like a fingerprint, iris or face.

Advantageously, the issuer bank server 30 can generates a signature of the identified level 35 of risk of the payment transaction and the instant payment application 14 can use a preset key 18 to check the validity of this signature.

In some embodiments, the payment terminal 20 can include in the continuation data 32 a token generated from the reference 34 of the merchant bank account. The instant payment application 14 can include this token into the instant payment request 87 and the issuer bank server 30 can access a token service provider 80 to check consistency between the received token and the reference 34 of the merchant bank account received through the terminal request 85. This consistency checking can be performed in addition or instead of the previously presented consistency checks.

In some embodiments, the payment terminal 20 can provide the continuation data 32 to the payment instrument 10 through a two-dimensional barcode like a QR code for instance. In such a case, the payment instrument comprises a built-in camera and is configured to flash the QR code displayed by the payment terminal. The capture of the QR code can activates the Instant payment application 14 in the Digital ID wallet 16.

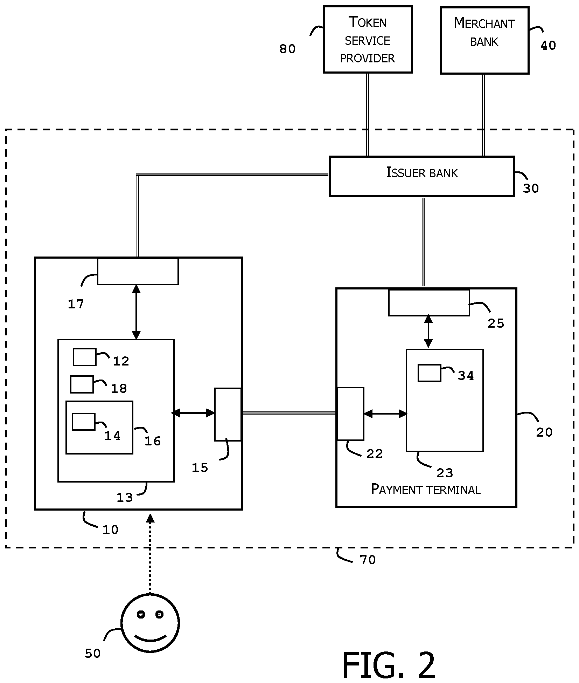

Figure 2 depicts a diagram of architecture of a payment system 70 for managing a payment transaction according to an example of the invention.

The payment system 70 comprises a payment instrument 10, a payment terminal 20 and an issuer bank server 30.

In this example, the payment instrument 10 is a smartphone hosting a first payment application 12 which is configured to operate banking services and operations related to a bank account assigned to the user 50.

The payment instrument 10 comprises a first communication interface 15 able to communicate with the payment terminal and a second communication interface 17 able to communicate with the issuer bank server 30. The first communication interface 15 can be a conventional contactless interface based on NFC or Ultra-Wide Band (UWB) protocol for instance. The second communication interface 17 can comprise a telecom module able to exchange messages and data with a remote entity.

The payment instrument 10 comprises a secure storage hosting the first payment application 12 and the digital identity wallet 16.

The payment terminal 20 can be a Point-of-Sale (POS) terminal including both a contactless communication interface 22 able to communicate with the payment instrument, and another communication interface 25 able to exchange data with the issuer bank server 30.

The payment terminal comprises a banking application 23 configured to perform the operations specific to the invention.

The first payment application 12 is designed to start a payment transaction compatible with EMVCo^{®} specifications.

The issuer bank server 30 is configured to authorize or refuse the continuation of the payment transaction. In particular, the issuer bank server 30 can check whether the transaction amount of the pending transaction complies with preset rules associated with the bank account of the user 50.

The payment instrument 10 comprises a digital identity wallet 16 that hosts an instant payment application 14 which is different from the first payment application 12. Both the instant payment application 14 and the first payment application 12 are issued by the same financial institution with which the user's bank account is opened.

When refusing the continuation of the payment transaction (initially started according to the EMVCo^{®} flow), the issuer bank server 30 is configured to generate a configuration data 31 that requests that the payment transaction be continued by the instant payment application 14. The issuer bank server 30 is configured to send the configuration data 31 (conveyed through a response 84) to the payment terminal 20.

Upon receipt of the configuration data 31, the payment terminal is configured to perform two distinct actions.

First action: The payment terminal generates a terminal request 85 comprising a transaction identifier 33 and a reference 34 of a merchant bank account associated with the payment terminal. Then the payment terminal sends the terminal request 85 to the issuer bank server 30.

Second action: The payment terminal generates a continuation data 32 comprising the transaction identifier 33 and the transaction amount. Then the payment terminal sends continuation data 32 to the payment instrument 10 (conveyed by a message 86).

Upon receipt of the continuation data 32, the instant payment application 14 is configured to build an instant payment request 87 that comprises the transaction identifier 33, the transaction amount and a dynamic linking authenticator 36 which is generated by the digital identity wallet 16. The instant payment application 14 is configured to send the instant payment request 87 to the issuer bank server 30.

The instant payment application 14 is configured to instruct the digital identity wallet 16 to generate the dynamic linking authenticator 36.

The issuer bank server 30 is configured to verify that the dynamic linking authenticator 36 is valid and that the content of the terminal request 85 and the content of the instant payment request 87 are consistent.

In case of success of the two verifications, the issuer bank server 30 is configured to generate and send an instant payment order 89 to a merchant bank server 40 for transferring the transaction amount to the merchant bank account. The issuer bank server 30 can use an identifier or address of the merchant bank server 40 inserted in the terminal request 85 by the payment terminal.

In some embodiments, the issuer bank server 30 can be configured to assess a level 35 of risk attached to the payment transaction and to include the level 35 of risk in the configuration data 31 sent to the payment terminal. The payment terminal can be configured to include the level 35 of risk in the continuation data 32 sent to the payment instrument 10. Before generating the dynamic linking authenticator 36, the digital identity wallet 16 can be configured to request the user 50 of the payment instrument to present appropriate credentials depending on the level of risk found in the received continuation data 32. Thus, the digital identity wallet 16 can adapt the security control according to the level of risk which has been determined by the issuer bank server 30.

In some embodiments, the payment terminal can store a reference 34 of the merchant bank account (like an IBAN) and a token generated from this reference 34. The payment terminal can be configured to include a token generated from the reference 34 into the continuation data 32. The Instant payment application 14 can be configured to include the received token into the instant payment request 87 which is sent to the issuer bank server 30. The issuer bank server 30 can be configured to access a token service provider 80 to check consistency between the token received through the instant payment request 87 and the reference 34 of the merchant bank account received through the terminal request 85.

In some embodiments, the payment terminal 20 can comprise a screen and be configured to generate a two-dimensional barcode (like a QR code) containing the continuation data 32. The payment instrument can include a camera and be configured to flash the two-dimensional barcode displayed by the payment terminal. The payment instrument can be configured to analyze the content of the two-dimensional barcode and to automatically trigger the instant payment application 14.

Preferably, the merchant bank server 40 can be configured to send to the payment terminal a confirmation message 90 notifying the payment terminal of the successful execution of the money transfer. Thus, the payment terminal can be aware of the successful execution of the payment transaction involving the instant payment application 14.

In the present description, the issuer bank server 30, the merchant bank server 40 and the token service provider 80 can be as many hardware servers comprising one or more hardware processors and program instructions designed to provide the above-described services and functions of these servers.

The invention is not limited to the described embodiments or examples. In particular, the described examples and embodiments may be combined.

Thanks to some embodiments of the invention, during a proximity (i.e. face-to-face) payment transaction, the decision to initiate the relay through an instant money transfer is proposed by the issuer bank server and accepted by the user which allows a second communication phase between the payment instrument and the payment terminal to get the message 86.

Thanks to some embodiments of the invention, the duration of the whole payment transaction is reasonable for the user compared to conventional payment transactions carried out through an EMVCO^{®} flow.

Thanks to some embodiments of the invention, existing payment infrastructure can be reused with slight adaptations that can be done through deployment of a piece of extra-software needed in the payment terminals to process the new messages handled by the payment terminals. In particular, this piece of software may enable the connection of the Terminal with the Issuer Bank using a processing circuit for Instant Payments different of the initial one which is card payment conventional one.

Thanks to some embodiments of the invention, Digital Identity wallets funded by the governments can be used to generate a strong proof of user's consent for continuing through an Instant Payment transaction in a way transparent for the merchant.

## Claims

**1.** A computer-implemented method for managing a payment transaction for an amount involving a payment terminal (20) and a payment instrument (10), the payment transaction being started with a first payment application (12) installed in the payment instrument as a transaction compatible with EMVCo^{®} specifications, the payment transaction being refused by an issuer bank server (30),
wherein the payment instrument comprises a digital identity wallet (16) hosting an instant payment application (14) different from the first payment application (12);
wherein, consequently of the refusal of the payment transaction, the issuer bank server (30) generates and sends to the payment terminal (20) a configuration data (31) requesting that the payment transaction be continued by the instant payment application (14);
wherein, upon receipt of the configuration data, the payment terminal:
generates and sends to the issuer bank server (30) a terminal request (85) comprising a transaction identifier (33) and a reference (34) of a merchant bank account associated with the payment terminal,
generates and provides to the payment instrument (10) a continuation data (32) comprising the transaction identifier (33) and the amount;
wherein, upon receipt of the continuation data (32), the instant payment application (14) builds and sends to issuer bank server (30) an instant payment request (87) comprising the transaction identifier (33), the amount and a dynamic linking authenticator (36) generated by the digital identity wallet (16); and
wherein, after both successfully verifying that the dynamic linking authenticator is valid and ensuring that the terminal request (85) and the instant payment request (87) are consistent, the issuer bank server (30) sends an instant payment order (89) to a merchant bank server (40) for transferring the amount to the merchant bank account.

**2.** The method according to claim 1, wherein the dynamic linking authenticator (36) is a signature generated by the digital identity wallet (16).

**3.** The method according to claim 1, wherein said configuration data (31) and the continuation data (32) comprise a level of risk (35) attached to the payment transaction and wherein, depending on the level of risk, the digital identity wallet (16) requests a user (50) of the payment instrument to present appropriate credentials before generating the dynamic linking authenticator (36).

**4.** The method according to claim 1, wherein the continuation data (32) comprises a token generated from the reference (34) of the merchant bank account, wherein the instant payment request (87) comprises said token and wherein the issuer bank server (30) accesses a token service provider (80) to check consistency between the token and the reference (34) of the merchant bank account received through the terminal request (85).

**5.** The method according to claim 1, wherein the payment terminal provides the continuation data (32) to the payment instrument (10) through a two-dimensional barcode or a contactless communication protocol.

**6.** The method according to claim 1, wherein the merchant bank server (40) sends to the payment terminal a confirmation message (90) notifying the payment terminal of the successful execution of the payment transaction involving the instant payment application (14) .

**7.** The method according to claim 1, wherein the digital identity wallet (16) is compliant with electronic IDentification, Authentication and trust Services, eIDAS, regulation.

**8.** A payment system (70) comprising a payment instrument (10), a payment terminal (20), and an issuer bank server (30), the payment instrument comprising a first payment application (12) able to start a payment transaction compatible with EMVCo^{®} specifications, the issuer bank server (30), being able to accept or refuse the payment transaction,
wherein the payment instrument comprises a digital identity wallet (16) hosting an instant payment application (14) different from the first payment application (12);
wherein, consequently of the refusal of the payment transaction, the issuer bank server (30) is configured to generate and send to the payment terminal (20) a configuration data (31) requesting that the payment transaction be continued by the instant payment application (14);
wherein, upon receipt of the configuration data, the payment terminal is configured to:
generate and send to the issuer bank server (30) a terminal request (85) comprising a transaction identifier (33) and a reference (34) of a merchant bank account associated with the payment terminal,
generate and provide to the payment instrument (10) a continuation data (32) comprising the transaction identifier (33) and the amount;
wherein, upon receipt of the continuation data (32), the instant payment application (14) is configured to build and send to the issuer bank server (30) an instant payment request (87) comprising the transaction identifier (33), the amount and a dynamic linking authenticator (36) generated by the digital identity wallet (16); and
wherein, after both successfully verifying that the dynamic linking authenticator (36) is valid and ensuring that the terminal request (85) and the instant payment request (87) are consistent, the issuer bank server (30) is configured to send an instant payment order (89) to a merchant bank server (40) for transferring the amount to the merchant bank account.

**9.** The payment system according to claim 8, wherein said configuration data (31) and the continuation data (32) comprise a level of risk (35) attached to the payment transaction and wherein, depending on the level of risk, the digital identity wallet (16) is configured to request a user (50) of the payment instrument to present appropriate credentials before generating the dynamic linking authenticator (36).

**10.** The payment system according to claim 8, wherein the continuation data (32) comprises a token generated from the reference (34) of the merchant bank account, wherein the instant payment request (87) comprises said token and wherein the issuer bank server (30) is configured to access a token service provider (80) to check consistency between the token and the reference (34) of the merchant bank account received through the terminal request (85).

**12.** The payment system according to claim 8, wherein the payment terminal is configured to provide the continuation data (32) to the payment instrument (10) through a two-dimensional barcode or a contactless communication protocol.

**13.** The payment system according to claim 8, wherein the merchant bank server (40) is configured to send to the payment terminal a confirmation message (90) notifying the payment terminal of the successful execution of the payment transaction involving the instant payment application (14).

**14.** The payment system according to claim 8, wherein the digital identity wallet (16) is compatible with electronic IDentification, Authentication and trust Services, eIDAS, regulation.

**15.** The payment system according to claim 8, wherein the payment instrument (10) is a smartphone, a physical smart card, a payment ring, a payment bracelet or a payment watch.
